# EUROPEAN PATENT APPLICATION

(11) **EP 2 437 402 A1**
(43) Date of publication of application: **04.04.2012**
(21) Application number: 11183609.4
(22) Date of filing: 30.09.2011
(51) Int. Cl.: H04B 1/715, H04L 27/26

(54) **Frequency-hopping method for LTE aperiodic sounding reference signals.**

(30) Priority: 01.10.2010 US 389051 P; 30.11.2010 WO PCT/US2010/058379
(71) Applicant: Research in Motion Limited, Waterloo, Ontario N2L 3W8 (CA); Smith, Jack Anthony, Irving, TX 75039 (US); Cai, Zhijun Sam, Irving, TX 75039 (US); Gao, Shiwei, Kanata ON K2K 3K1 (CA); Research in Motion Corporation, Wilmington, DE 19801 (US); 2209053 Ontario Inc., Waterloo, Ontario N2L 3W8 (CA)
(72) Inventor: Smith, Jack Anthony, Irving, TX Texas 75039 (US); Cai, Zhijun, Irving, TX Texas 75039 (US); Gao, Shiwei, Kanata, Ontario K2K 3K1 (CA)
(74) Representative: Finnie, Peter John

(57) **Abstract**

Methods and apparatus are provided to enable aperiodic sounding reference signaling including frequency hopping through the use of additional RRC configuration. The methods can require little or no additional L1 overhead to support narrowband frequency hopping for aperiodic sounding transmissions. In some embodiments, an approach is provided for extending an LTE periodic sounding reference signal methodology to include aperiodic sounding. One benefit of the proposed technique is that it enables each UE to perform aperiodic channel sounding in sounding subframes, using a frequency-hopping pattern, in which the sounding bandwidth of the UE can be narrowed appropriately to match its link capability. Additional benefits of the new approach include better resource utilization, lower signaling overhead, faster channel information update rates, and lower blocking probabilities.

## Description

### Cross-reference to Related Applications

This application claims the benefit under 35 U.S.C. § 119(e) of U.S. Provisional Application No. 61/389,051, filed October 1, 2010, entitled "Frequency-Hopping Method for LTE Aperiodic Sounding Reference Signals," and under 35 U.S.C. § 119(a)-(d) of PCT Patent Application No. PCT/US10/58379, filed November 30, 2010, entitled "Frequency-Hopping Method for LTE Aperiodic Sounding Reference Signals." The disclosures of U.S. Provisional Application No. 61/389,051 and PCT Application No. PCT/US10/58379 are incorporated herein by reference in their entireties.

### BACKGROUND

### Field

The present disclosure generally relates to data transmission in mobile communications systems and more particularly to frequency hopping for aperiodic sounding reference signals.

### Description of the Related Art

In known wireless telecommunications systems, transmission equipment in a base station or access device transmits signals throughout a geographical region known as a cell. As technology has evolved, more advanced equipment has been introduced that can provide services that were not possible previously. This advanced equipment might include, for example, an E-UTRAN (evolved universal terrestrial radio access network) node B (eNB), a base station or other systems and devices. An E-UTRAN node B can also be referred to as an enhanced node B in the context of this document. Such advanced or next generation equipment is often referred to as long-term evolution (LTE) equipment, and a packet-based network that uses such equipment is often referred to as an evolved packet system (EPS). An access device is any component, such as a traditional base station or an LTE eNB (Evolved Node B), that can provide a user agent (UA) such as user equipment (UE) with access to other components in a telecommunications system.

In mobile communication systems such as an E-UTRAN, the access device provides radio accesses to one or more UAs. The access device can include a packet scheduler for allocating uplink (UL) and downlink (DL) data transmission resources among all the UAs communicating to the access device. The functions of the scheduler include, among others, dividing the available air interface capacity between the UAs, deciding the resources (e.g. sub-carrier frequencies and timing) to be used for each UA's packet data transmission, and monitoring packet allocation and system load. The scheduler allocates physical layer resources for physical downlink shared channel (PDSCH) and physical uplink shared channel (PUSCH) data transmissions, and sends scheduling information to the UAs through a control channel. The UAs refer to the scheduling information for the timing, frequency, data block size, modulation and coding of uplink and downlink transmissions.

In certain wireless networks, channel sounding can be used for an access device to estimate a channel quality. For example, in the LTE standard, an eNB can employ channel sounding, using Sounding Reference Signals (SRSs) or other signals transmitted by one or more UEs. In the 3GPP (3rd Generation Partnership Project) LTE-Advanced communication standard (e.g., 3GPP Release 10 and later), uplink spatial multiplexing of up to four layers may be supported. Prior to supporting spatial multiplexing, only a single-antenna port mode of operation was available for the uplink. Thus, the methodology defined in earlier releases of the 3GPP communication standard (e.g., 3GPP Releases 8 and 9) for obtaining channel state information was designed to only measure the channel between a single uplink transmission antenna and the eNB within any single subframe.

To support the new uplink MIMO capabilities, it is desirable for the next release of the 3GPP communication standard (e.g., 3GPP release 10) to allow simultaneous channel sounding from multiple UE transmission antennas. Because each uplink transmission antenna requires its own set of orthogonal sounding resources, a new more-efficient sounding methodology is desirable for this next release.

The method used for sounding the channel for the earlier release UEs was known as periodic sounding since this method configures each Radio Resource Control (RRC) Connected UE to transmit a known signal at periodic intervals so that the eNB can measure the channel. Consequently, each UE consumes a fixed amount of resources for that transmission periodically (e.g., every 10 ms) regardless of whether the UE has uplink data to convey or not.

To improve the efficiency in the next release of LTE (e.g., 3GPP Release 10 and later), a new aperiodic sounding methodology (i.e., a sounding methodology of irregular occurrence) is being defined which allows the eNB to command the UE to perform aperiodic sounding only when it is required by the eNB. This aperiodic sounding methodology will likely improve efficiency since it will allow the resources to be consumed only when it is beneficial to do so (e.g., only when the UE has uplink data to convey). The new aperiodic sounding methodology is being defined as a complementary mechanism for 3GPP Release 10 and later UEs. The methodology can be used in conjunction with the legacy periodic sounding mechanism in a process where the periodic sounding is configured for each Release 10 RRC_Connected UE, but with a longer period (e.g., 20-40 ms or longer) to provide the eNB some information regarding the channel to maintain timing alignment, adjust the UE power control, etc., and then the aperiodic sounding methodology is used to obtain more frequent channel state updates as needed once data comes into the uplink buffer.

In a LTE Release-8 system, the eNB may configure the periodic sounding methodology for a UE to transmit SRS in just one subframe or periodically in multiple subframes. One purpose of a Release 8/9 sounding reference signal (SRS) transmission is to help the eNB estimate the uplink channel quality to support frequency-selective uplink scheduling. In addition, SRS may also be used to control uplink power or uplink timing advance. In the Release 8/9 periodic sounding methodology, the eNB is able to configure the periodic sounding mechanism to perform only a single sounding transmission, similar to how the aperiodic sounding methodology is being developed in Release 10. However, the Release 8/9 single-shot methodology uses RRC signaling to configure and trigger this single-shot sounding transmission. Such a single shot methodology is potentially much slower than the fast channel updates envisioned for aperiodic sounding, which will be triggered using commands at the physical layer.

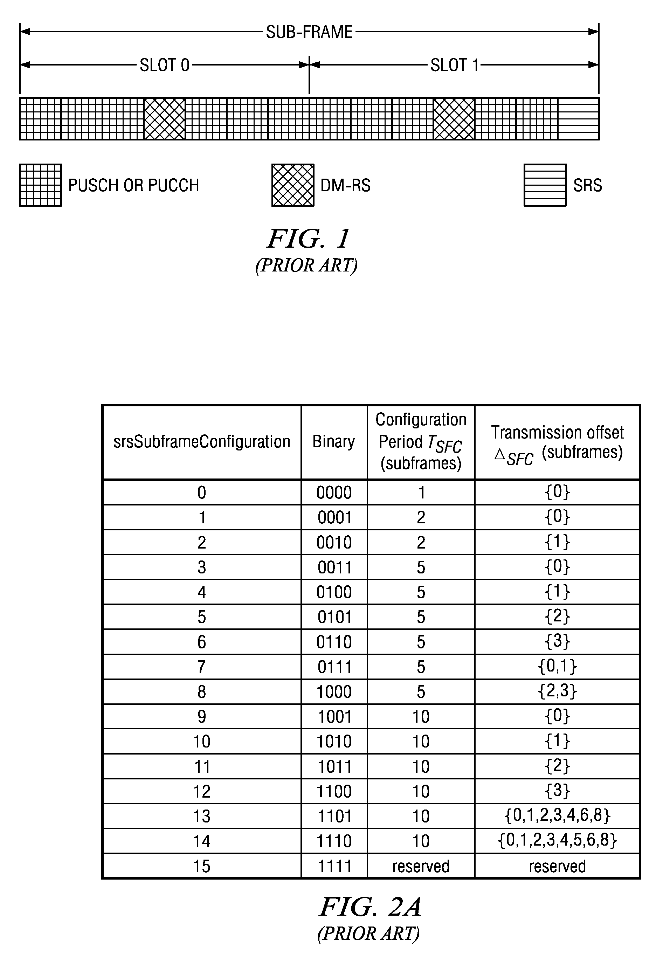

Referring to Figure 1, labeled Prior Art, SRS is transmitted in the last single carrier frequency division multiple access (SC-FDMA) symbol in a subframe in both FDD and TDD as shown in Figure 1. In addition, for time division duplexing (TDD), SC-FDMA symbol(s) in Uplink Pilot Time Slot (UpPTS) is used for SRS.

In a given cell, SRS from multiple UEs may be multiplexed in several domains. More specifically, the UEs may be multiplexed via code division multiplexing (CDM), time division multiplexing (TDM), fine frequency division multiplexing (FDM), and/or coarse FDM. With CDM, UEs using different cyclic shifts for SRS are multiplexed in a subframe. Eight different cyclic shifts are supported for SRS, which is defined in 3GPP, TS 36.211. With TDM, by allocating different periodicity and/or subframe offset, multiple UEs transmit SRS in different subframes. A SRS configuration index ISRS for SRS periodicity and SRS subframe offset are defined in 3GPP, TS 36.213. With fine FDM, the multiplexing uses a transmission comb across subcarriers. More specifically, with fine FDM, multiple UEs can transmit SRS on different sets of subcarriers (combs) in frequency domain; a transmission comb ( ) is defined in 3GPP TS 36.211 and configured by higher layers. Since only a repetition factor of 2 is used in LTE, the set of possible values for is {0, 1}. With coarse FDM, the multiplexing uses transmission bandwidth and frequency domain position. More specifically, different UEs can transmit SRS with different bandwidths and frequency domain locations. The bandwidth and frequency domain position of SRS are configured by radio resource control (RRC) signaling. Because transmission of a large SRS bandwidth can require a larger transmit power compared to transmission of a narrow SRS bandwidth, a narrow bandwidth is preferable for cell-edge UEs. Due to this reason, each allowed configuration that is defined within the known release supports up to four different transmission bandwidths, and the actual SRS bandwidth used for a transmission is dependent on both the configured cell specific SRS bandwidth parameter and the system bandwidth. Also, even if a small SRS bandwidth is configured for a UE, the eNB may be able to estimate the uplink channel quality of the entire bandwidth of this UE by using the frequency hopping of multiple SRS transmissions across multiple subframes. Frequency hopping refers to a technique where a series of transmissions is performed over a set of transmission times, and the transmission frequency or frequencies is changed for at least some of the transmission times in the series.

In LTE, the periodic SRS methodology is defined such that frequency hopping can be employed to perform channel sounding over a larger channel bandwidth using a series of narrower bandwidth transmissions. As a simple example, LTE allows the UE to be configured to sound the entire channel bandwidth using a series of two narrower-bandwidth transmissions, where each of the narrower-bandwidth transmissions are performed over only half of the total bandwidth. Thus, on the first transmission, the UE sounds one-half of the bandwidth, and on the second transmission, the UE performs sounding on the remaining half of the bandwidth. A variety of configuration options exist within LTE such that UEs that require even narrower sounding bandwidths for an individual transmission can still be accommodated. Note that in this document, the terms "hopping" and "frequency hopping" are used interchangeably.

The parameters with respect to multiplexing are UE-specific parameters which are semi-statically configured by higher layers, such as a radio resource control (RRC) layer. A semi-static configuration is a type of configuration where the parameter values, once configured, maintain the same value until the parameter values are explicitly reconfigured. The UE-specific parameters are semi-static parameters since the eNB sends an explicit command to configure the parameters to a specific set of values, and the parameters then maintain this same set of values for multiple subframes and only change when the eNB specifically sends a command to change the values. This differs from a dynamic configuration, which is a configuration where the eNB configures the parameters to a specific set of values, but the configuration is only in effect for a single instance in time or a single event such as a subframe.

In the known release of the LTE specification, the eNB configures cell-specific SRS subframes and UE-specific SRS subframes. The cell-specific SRS configuration refers to SRS subframes reserved for potential SRS transmission from one or more UEs in a cell, while the UE-specific subframes indicate the subframes in which a particular UE should transmit SRS. Therefore, the cell-specific SRS subframe parameters are broadcast as system information, and the UE-specific SRS subframe parameters are signaled by dedicated RRC signaling to the particular UE.

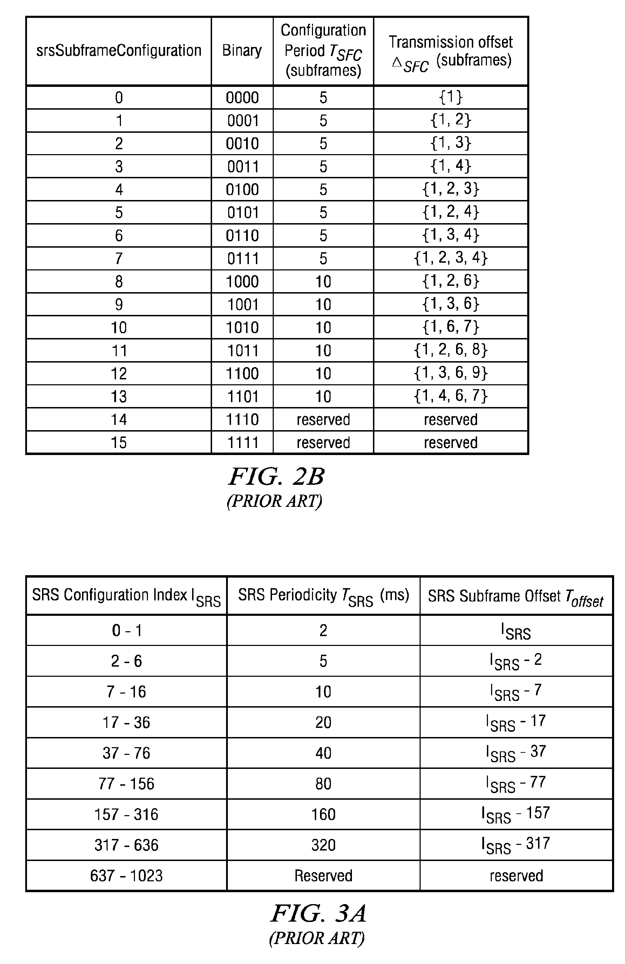

Cell-specific SRS subframes are determined by the cell-specific subframe configuration period and the cell-specific subframe offset which are listed in Tables shown in Figures 2A and 2B, for frequency division duplex (FDD) and time division duplex (TDD), respectively.

The parameter srsSubframeConfiguration is the cell-specific SRS subframe configuration index parameter which is broadcast in system information. Sounding reference signal subframes are the subframes satisfying , where nS is the slot index (where there are two slots per subframe and ten subframes per radio frame, so 0≤nS≤19). For configurations where multiple values of ΔSFC are specified, SRS subframes are all the subframes satisfying the previous equation for all listed values of ΔSFC. For example, for srsSubframeConfiguration=13, subframes 0, 1, 2, 3, 4, 6 and 8 in each 10 ms radio frame will be reserved as cell-specific SRS subframes, but subframes 5, 7 and 9 will not be used for this purpose. For TDD, the sounding reference signal is transmitted only in configured uplink (UL) subframes or UpPTS.

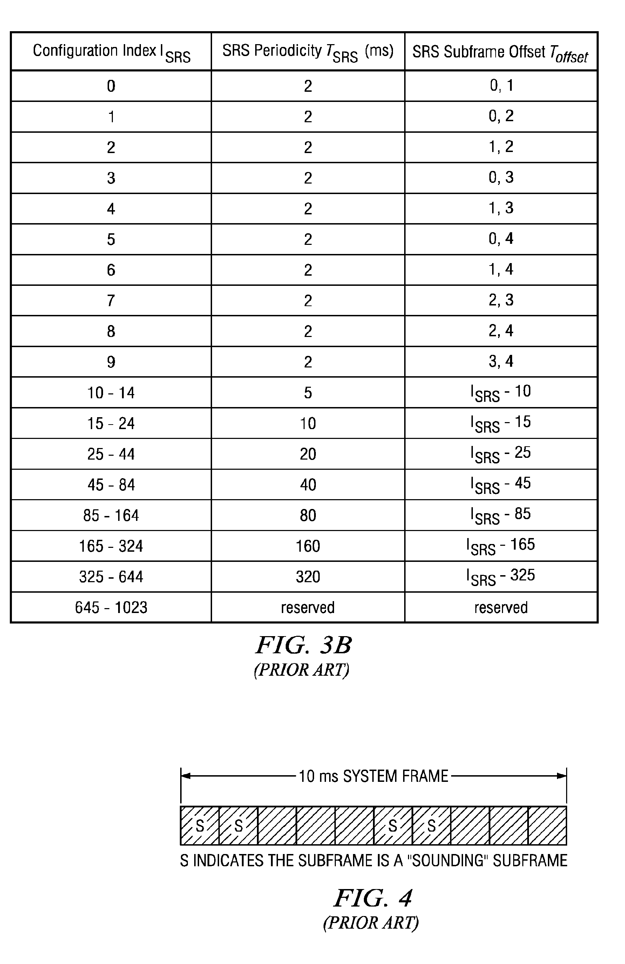

The UE-specific SRS subframe configuration for SRS periodicity, , and SRS subframe offset, , is defined in the tables shown in Figure 3A and Figure 3B, for FDD and TDD, respectively. The SRS Configuration Index ISRS is configured by higher layers. The periodicity of the SRS transmission is selected from the set {2, 5, 10, 20, 40, 80, 160, 320} ms (or corresponding 1 ms subframes). For the SRS periodicity of 2 ms in TDD, two SRS resources are configured in a half-frame containing UL subframe(s).

As the Release 10 aperiodic SRS mechanism is being developed, there are a number of design goals that could potentially enhance performance. These design goals include the ability to support narrowband aperiodic sounding for power-limited UEs, the ability to efficiently multiplex aperiodic transmissions with existing periodic transmissions while avoiding collisions, and the ability to trigger a UE to perform aperiodic sounding in the nearest available sounding subframe to minimize sounding delay.

However, there are certain limitations of the Release 8/9 periodic sounding methodology that could potentially complicate the ability to achieve these goals.

For example, in the LTE periodic sounding methodology, the eNB has the ability to designate some number of subframes within each system frame as sounding subframes. This process is accomplished by selecting one of the rows in the table shown in Figure 2 and broadcasting the srsSubframeConfiguration index of that row. Figure 4 shows an example of the subframes in each system frame that are designated as sounding subframes when srsSubframeConfiguration is set to a value of 7 and broadcast as part of the cell-specific information.

Note that when the eNB broadcasts the srsSubframeConfiguration value of 7, this parameter only provides a limited amount of information to a UE. For example, this parameter informs the UE that the 1st, 2nd, 6th, and 7th subframes of each system frame are sounding subframes and that the UE should not perform PUSCH transmissions in the last symbol of those subframes. However, this parameter does not inform the UE the manner in which the sounding subframes is being used by the eNB.

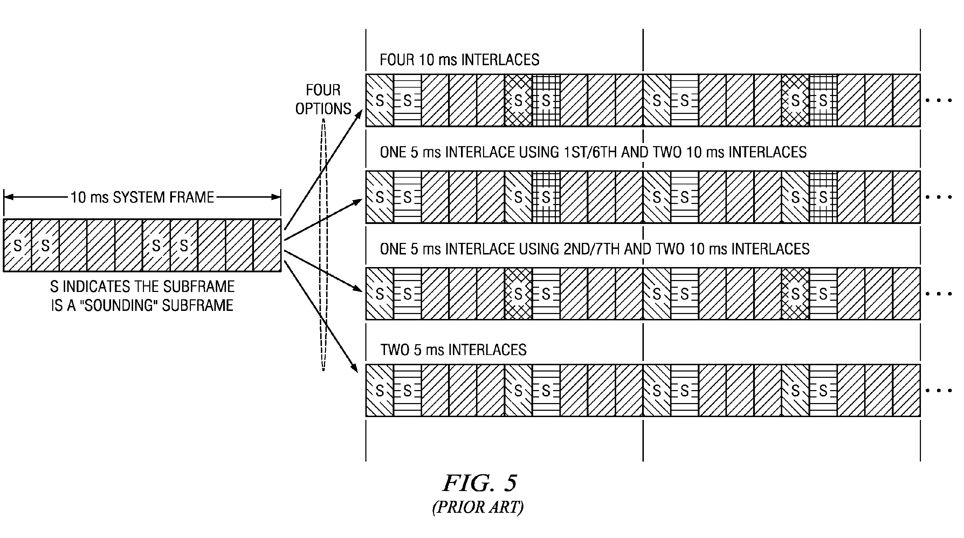

Figure 5 shows an example of this issue. More specifically, Figure 5 shows that the various sounding subframes can be grouped together in different ways to form different numbers of interlaces, where an interlace is defined as a periodic set of subframes bound by a common frequency hopping pattern. The first possible grouping is to form four different interlaces using the four sounding subframes. This is shown in Figure 5 at the top-right of the figure. The next possible grouping is to form one 5 ms interlace and two 10 ms interlaces by taking two of the sounding subframes and forming a single interlace with them. There are at least two ways to accomplish this. Either the 1st and 6th subframes can be used to form the 10 ms interlace, or the 2nd and 7th subframes can be used. Both of these options are shown as the second and third illustrations at the right side of the figure. Finally, the four sounding subframes can be used to form two interlaces with a 5 ms period. This is shown at the bottom-right of Figure 5.

As discussed, the cell-specific information broadcast as part of the current periodic sounding methodology does not provide a UE with a complete picture of how the various sounding subframes are being used to form interlaces. The only information supplied to a UE is the information regarding the interlace to which the UE is assigned; the UE receives this information when the UE-specific periodic SRS parameters are configured for the UE using RRC configuration. Thus, if the eNB configures the UE to perform sounding using the interlace in the 6th subframe at the top right of Figure 5, the UE knows what hopping pattern to use in the interlace of the 6th subframe, but has no idea what hopping pattern is appropriate in the other interlaces. Consequently, if a similar set of parameters for aperiodic sounding are defined as those used for periodic sounding (e.g., srs-Bandwidth, srs-HoppingBandwidth, freqDomainPosition, srs-Configlndex, etc.), then, a UE will typically only be able to perform aperiodic sounding in a subset of the total set of subframes designated as sounding subframes.

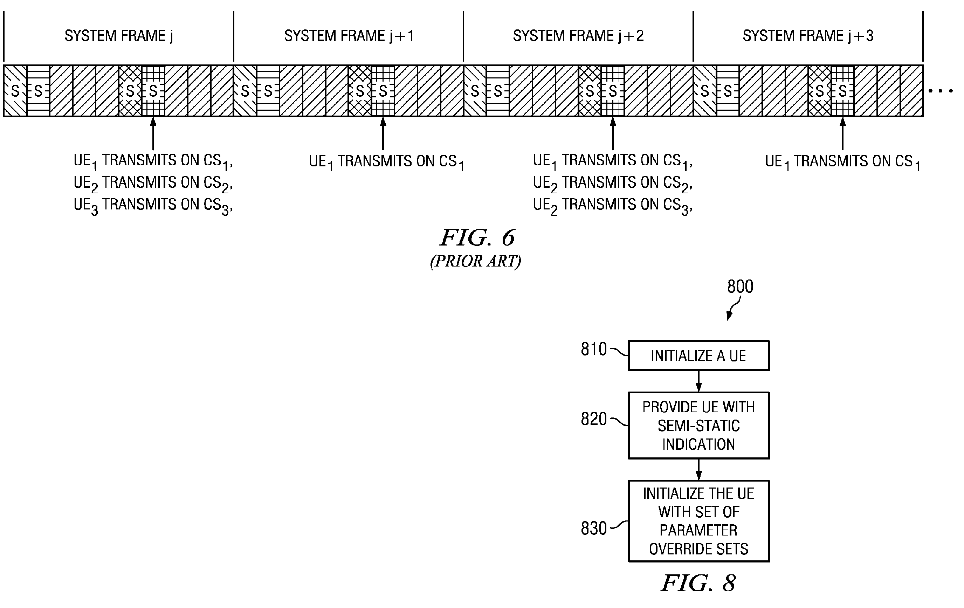

Another limitation of Release 8/9 relates to the periodic sounding definition (e.g., the defined UE-specific SRS periodicities form the set {2, 5, 10, 20, 40, 80, 160, 320} ms). Since most of the periodicities are multiples of the 5 ms period, this would seem to suggest that all of these periods (except 2 ms) are nicely compatible and UEs with any of the different sounding periods (except possibly 2 ms) can be multiplexed onto the same interlace by simply using different cyclic shift values. An example is illustrated in Figure 6 where the interlace with a fundamental period of 10 ms is used to multiplex a UE with a sounding period of 10 ms (i.e., UE1) with two UEs that are configured with sounding periods of 20 ms, all on different cyclic shift values. However, the scenario shown in Figure 6 is not valid as this scenario would result in severe interference unless all UEs were only performing wideband sounding.

To understand why this scenario is not valid, the relationship between the different defined periods should be examined. More specifically, the Release 8/9 Periodic SRS methodology is based on a split tree structure. The possible UE-specific periodicities of 2,5,10,20,40,80,160,320 ms can be divided into two compatible sets, with the first set containing the entries {2,5,20,80,320} ms periods, and the second set containing the entries {10,40,160} ms periods. The definition of compatibility in this context is that if the same sounding bandwidths are used for each period and configured properly, then these sounding bandwidths will align properly in every subframe for which the periods coexist, and consequently, multiple sounding periodicities can be orthogonally multiplexed within the same interlace and the resources pack nicely by simply using orthogonal cyclic shifts appropriately.

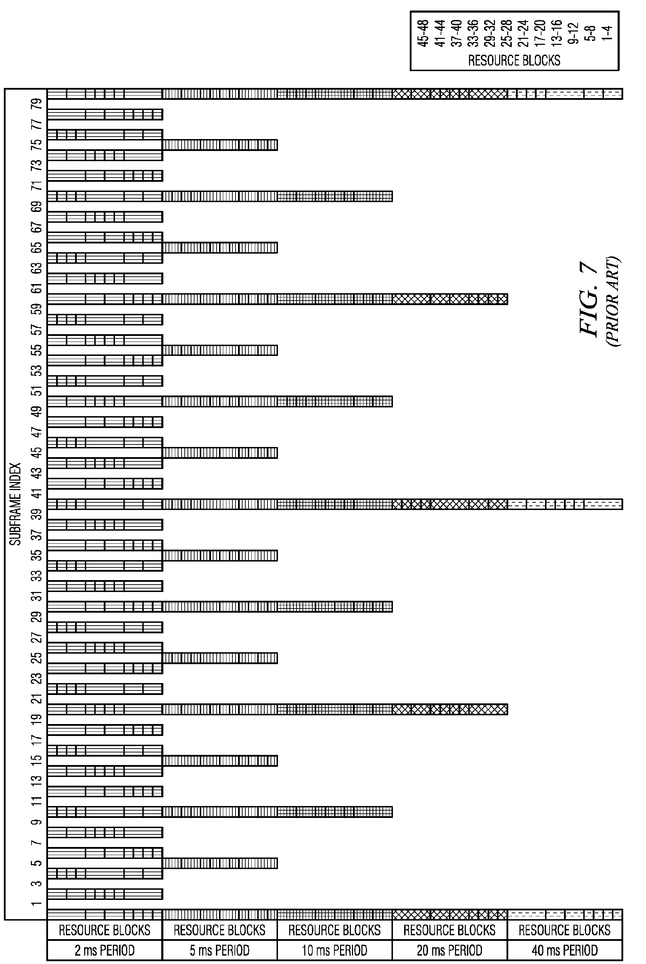

An illustration of the reason why the various periodicities form two disjoint sets is shown in Figure 7, which shows the first 81 subframes of the 2, 5, 10, 20, and 40 ms periods. In Figure 7, all periods have been aligned in subframe 0 for the purpose of this illustration (see e.g., the large block at the top which covers 1/3 of the bandwidth, with two 1/6 bandwidth contiguous blocks below it, and finally four 1/12 bandwidth blocks of size four RBs each of subframe 0). As time progresses to the right, it can be determined which periods are compatible and which aren't by whether the patterns are the same each time they appear in the same subframe. More specifically, the 2 ms and the 5 ms periods are compatible, as the same pattern appears every 10 ms. The 5 ms pattern does have an entry in every subframe ending in 5, but this would be compatible with the 2 ms period which is delayed by one, provided that it is configured properly (this can be observed by simply taking the pattern for the 2 ms period and shifting it left by 3 subframes). Also the 10 ms and 40 ms patterns are not compatible with the 2 ms pattern (see e.g., subframe 40), but are compatible with each other. If all patterns were illustrated, it would be clear that they are divided into the two compatible sets described above. Note that, while not shown, if starting at subframe 0 of the 10 ms period with a progression of a 1 ms pattern, the pattern maintains synchronization across all time with the 10 ms pattern. Thus, the 1 ms period can be added to the second set of compatible patterns.

Thus, the two incompatible sets limit the ability to mitigate the insufficient UE knowledge simply through eNB implementation. If all periods were compatible with a single basis pattern, then the eNB implementer could just be careful in the way that it sets the phase of each interlace and the hopping pattern could be set for an individual interlace, but would apply to the others. Unfortunately, with two different basis patterns, this can't be done completely. The phases of those interlaces corresponding to the same compatibility group can be set properly, and a single UE hopping pattern will be valid for all of those interlaces. Since the eNB is in charge of triggering the sounding, the eNB can decide to trigger only in the compatible interlaces. This is a valid solution for increasing the ability to sound beyond a single interlace. However, this solution only allows sounding in roughly half of the interlaces, and the eNB scheduler will be somewhat constrained.

Since aperiodic sounding will take place using the same cell-specific resources as those defined for periodic sounding, the aperiodic sounding transmissions must occur on vacant resources left unused by the periodic sounding transmissions, or they must take place in additional sounding subframes that can be designated by the eNB when more sounding capacity is required. The limitations associated with the Release 8/9 periodic sounding methodology (i.e., limited information available at the UE and the inability to mitigate this lack of information through eNB implementation) present a plurality of challenges. More specifically, how to allocate resources to a UE for which the eNB would like to obtain channel state information while avoiding collisions with any periodic sounding transmissions that may occur. Also, how to obtain efficient usage of the resources used for sounding so that a minimum amount of resources must be set aside for sounding. Also, how to signal the allocation to a given UE while minimizing the amount of signaling overhead.

Since UEs can be multiplexed in the dimensions of time, frequency, and code, the signaling requirement for allocating an aperiodic SRS resource to an individual UE becomes that of: indicating that sounding for the UE is triggered, indicating the subframe that should be used by the UE for sounding, indicating the comb that should be used, indicating the transmission bandwidth that should be used for the aperiodic sounding transmission, along with the starting and stopping subcarrier indices, and, indicating the cyclic-shifts that should be used.

A UE typically has knowledge of the correct hopping pattern to use for its aperiodic SRS transmission only in those subframes that correspond to its periodic assignment. Conveying the necessary information for subframes not associated with its periodic assignment would imply that a minimum of 2 bits would normally be required in the physical layer signaling just to indicate this information, and additional bits would be required to indicate the other parameters. One option to avoid this overhead is to limit the sounding bandwidth for aperiodic sounding to only wideband sounding, in which case the SRS transmission bandwidth and its location are known by default. While this does reduce the physical layer signaling overhead, it hurts the ability of the eNB to efficiently multiplex aperiodic sounding transmissions within the resources that are not used by the periodic sounding transmissions when those unused resources are such that they will only support narrowband sounding transmissions. This is because wideband and narrowband transmissions cannot coexist within the same SRS sub-frame (and same transmission comb) without causing mutual interference due to the frequency resources used for each type necessarily overlapping. Thus, if narrowband periodic SRS have been configured for a particular sub-frame, wideband aperiodic SRS may not be multiplexed onto the same sub-frame (and same transmission comb). This condition can leave some frequency resources on SRS sub-frames unused or vacant whilst forcing the system to set aside more SRS sub-frames to accommodate the wideband aperiodic SRS, thereby reducing the radio resource usage efficiency of the system.

Furthermore, constraining aperiodic SRS to be wideband-only also hurts the channel estimation by forcing many power-limited UEs to sound at a bandwidth that is wider than may be appropriate. UEs have a finite transmission power to distribute over the transmitted bandwidth. For UEs towards the edge of a cell, or those suffering from high levels of interference at the base station receiver, the finite constraint on UE transmission power can mean that the received signal to noise ratio per unit bandwidth (e.g., per Hz) at the base station is inadequate for channel estimation purposes, rendering the SRS transmission useless. The channel estimation accuracy for such UEs can be improved by concentrating the available SRS transmission power within a narrower transmission bandwidth (at the expense of a reduction in the frequency range sounded). For UEs in more favorable radio conditions, it may still be preferable not to constrain aperiodic SRS to be wideband only. This is because for such non-power-limited UEs, the transmission of a narrowband SRS requires proportionally less transmit power (and hence less battery power) than a wideband SRS transmission.

### SUMMARY

In accordance with the present disclosure, a methodology is disclosed that enables narrowband aperiodic sounding and frequency hopping through the use of additional RRC configuration, thus requiring little or no additional physical layer overhead to support narrowband frequency hopping for aperiodic sounding transmissions. More specifically, a simple approach is disclosed that extends the LTE periodic sounding reference signal methodology to include aperiodic sounding. One benefit of the proposed technique is that it enables each UE to perform aperiodic channel sounding in every sounding subframe using a frequency-hopped approach where the sounding bandwidth of the UE can be narrowed appropriately to match its link capability. Additional benefits of the new approach include better resource utilization, lower signaling overhead, faster channel information update rates, and lower blocking probabilities.

The methodology allows the eNB to define multiple aperiodic configurations (each with a possibly different hopping pattern) and semi-statically indicate which aperiodic configuration should be used by a UE within each SRS subframe.

Additionally, in certain embodiments, a method by which the eNB can reduce the number of aperiodic configurations that must be defined and signaled to the UE is disclosed. This method defines a minimum set of basis hopping patterns and forces all of the interlaces that the eNB establishes for periodic sounding to conform to one of the basis hopping patterns in the minimum set. Also in certain embodiments, different signaling methodologies may be employed.

### BRIEF DESCRIPTION OF THE DRAWINGS

The present disclosure may be better understood, and its numerous objects, features and advantages made apparent to those skilled in the art by referencing the accompanying drawings. The use of the same reference number throughout the several figures designates a like or similar element.

Figure 1, labeled Prior Art, shows a block diagram of an SRS transmission.

Figures 2A and 2B, labeled Prior Art, generally referred to as Figure 2, show tables of sounding reference signal subframe configurations.

Figures 3A and 3B, labeled Prior Art, generally referred to as Figure 3, show tables of SRS Periodicity.

Figure 4, labeled Prior Art, shows a block diagram of subframes designated as sounding subframes.

Figure 5, labeled Prior Art, shows a block diagram of various interlace options available with srsSubframeConfiguraiton equals 7.

Figure 6, labeled Prior Art, shows a block diagram of incorrect multiplexing of two 20 ms period UEs with a 10 ms period UE.

Figure 7, labeled Prior Art, shows a block diagram of different hopping periods.

Figure 8 shows a flow chart of the operation of a system for providing frequency hopping for aperiodic sounding reference signals.

Figure 9 shows a block diagram of a minimum set of basis hopping patterns.

Figure 10 shows a block diagram of hopping patterns which have a different starting phase.

Figure 11 shows a block diagram of a set of basis sounding periods compatible with other sounding periods.

Figure 12 shows a block diagram of bandwidth configurations that have poor periodic SRS multiplexing capabilities.

Figure 13 shows a block diagram of bandwidth configurations where a single interface is split into multiple sub-interlaces.

Figure 14 shows a table of how DCI indications are dependent upon sounding bandwidth.

Figure 15 shows a diagram of a wireless communications system including a UE operable for some of the various embodiments of the disclosure.

Figure 16 shows a block diagram of a UE operable for some of the various embodiments of the disclosure.

Figure 17 shows a diagram of a software environment that may be implemented on a UE operable for some of the various embodiments of the disclosure.

Figure 18 shows a block diagram of an illustrative general purpose computer system suitable for some of the various embodiments of the disclosure.

### DETAILED DESCRIPTION

The present disclosure allows an eNB to define multiple aperiodic sounding reference signaling configurations to be used by a UE. Each of the configurations can employ a different frequency hopping pattern such that all or most of the sounding reference subframes which have been configured with periodic SRS frequency hopping patterns are compatible with the hopping pattern associated with one of the aperiodic configurations.

This methodology allows the eNB to semi-statically designate which of the defined aperiodic configurations should be used by the UE if aperiodic sounding is triggered in a given subframe. This methodology provides the UE with knowledge of what would be an appropriate hopping pattern in the subframe, while saving the physical layer signaling overhead that would normally be associated with providing bandwidth locations dynamically.

Note that certain features may be discussed with respect to one of the embodiments, but are applicable to other embodiments. Though not explicitly stated in all embodiments, the various features, techniques, and methodologies stated in one embodiment should be considered as alternative embodiments of each of the other embodiments.

Referring to Figure 8, a flow chart of the operation of a system 800 for providing frequency hopping for aperiodic sounding reference signals according to one embodiment. The system provides a flexible framework that can be optimized in different ways based on the requirements of the eNB implementation.

More specifically, the eNB can initialize a UE by conveying a set of N aperiodic sounding reference signaling (SRS) configurations to the UE at step 810. Each of the configurations defines a base hopping pattern and a specific resource definition using a similar set of parameters as that defined for periodic SRS. The base hopping pattern could be the same for multiple aperiodic configurations, but the frequency hopping pattern of each of the configurations can be unique. Thus, two or more of such configurations can contain at least one parameter that indicates one of a plurality of aperiodic frequency hopping patterns, as will be described later in detail. In another embodiment, the step 810 can be omitted, and the UE can have information on the set of N aperiodic SRS configurations without any transmission from the eNB.

In this system, N will depend upon the exact eNB implementation. In alternate embodiments, N would equal 2, but the eNB implementer has the option of setting N appropriately for their implementation.

The eNB provides the UE with a semi-static indication that describes which of the N aperiodic configurations is valid for each subframe in a system frame at step 820. If the eNB triggers aperiodic sounding reference signaling for a UE that should take place in subframe n within a system frame, the UE can use the aperiodic configuration that the eNB has semi-statically associated with subframe n.

One example of how this information can be conveyed is through the use of a simple bitmap that includes 10 sets of ceil(log2(N)) bits, where N is the number of aperiodic SRS configurations initialized for the UE by the eNB. This indication could be provided using UE-specific (or unicast) higher-layer signaling, cell-specific/carrier-specific broadcast signaling, or some combination of UE-specific and cell-specific/carrier-specific broadcast signaling. Other signaling methods to reduce the signaling overhead can also be used.

Although the system can use one indication for each subframe in a system frame, other embodiments could provide an indication for a smaller or larger number of subframes than ten subframes.

Next, in certain embodiments, the eNB can initialize the UE with a set of M parameter override sets that are used to dynamically modify certain parameters in the aperiodic SRS configuration, using indications in the physical layer message that performs the triggering at step 830. For example, each of the aperiodic SRS configurations can be initialized with a static set of cyclic shifts or other parameters, but the parameter overrides can be used to indicate that an alternative set of parameters should be used for a specific transmission instance. These parameters allow the eNB the flexibility to select alternative cyclic shift assignments, comb assignments, and the like to more efficiently multiplex the aperiodic transmissions with the periodic transmissions.

In certain embodiments, the parameter override sets may also include a subframe delay indication that allows the eNB to send an aperiodic sounding trigger, but specify that the transmission should occur in a subframe later than the subframe at which the transmission would normally occur. For example, a single bit may be associated with the parameter override set which specifies whether the transmission should occur in the normal cell-specific sounding subframe or be delayed to the next cell-specific sounding subframe.

The system provides a very flexible framework that can be used in conjunction with most of the different periodic implementation possibilities, and most (if not all) of the alternate embodiments described in the following subsections can be implemented using this system.

In another embodiment, a method by which the eNB can reduce the number of aperiodic configurations that must be defined and signaled to the UE is set forth.

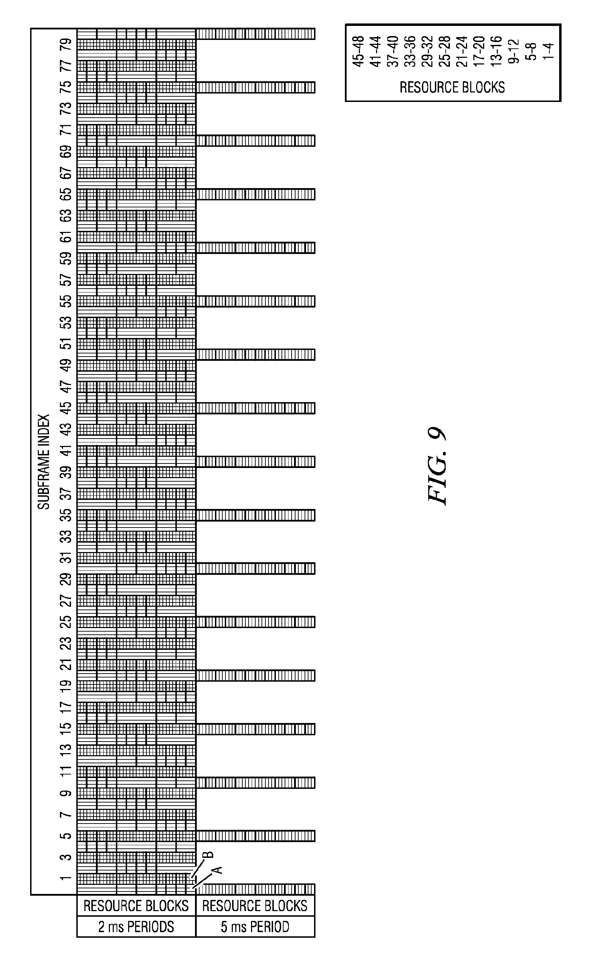

More specifically, under a legacy approach, no restrictions are placed on the relationships between different interlaces simply because the restrictions are not needed in the periodic scenario. An example of this is shown in Figure 9 where every subframe is designated as a sounding subframe and two 2-ms interlaces (even and odd subframe indices, respectively) are created by the eNB. When the eNB establishes these two interlaces, it has complete flexibility over how it assigns the UEs to the frequency-domain locations.

Referring to Figure 9, the eNB can configure two or more of a plurality of aperiodic sounding reference signaling configurations to have different combinations of periods (or periodicity) and subframe offsets. In the illustrated embodiment, the eNB has assigned UE "A" a subframe offset of 0, a sounding bandwidth of four resource blocks (RBs) and a frequency-domain location index of 0, thus causing the UE "A" to perform its initial sounding transmission on the first four resource blocks of the 2 ms period interlace that occupies the even subframes. Similarly, the eNB has assigned UE "B" a subframe offset of 1, a sounding bandwidth of four RBs and a frequency-domain location index of 0, thus causing the UE "B" to perform its initial sounding transmission on the first four resource blocks of the 2 ms period interlace that occupies the odd subframes. Both UEs then begin the hopping patterns dictated by the equations in 3GPP TS 36.211 (not shown in Figure 9). Because the assignment in the 2 ms period interlace that occupies odd subframes is performed with no regard to other interlaces, an incompatibility has formed with the 5 ms interlace (shown in 5 ms period interlace), which is exhibited in subframe 5, where according to the 2 ms period interlace, the four RB-wide transmissions would occur in the upper 1/3 of the bandwidth, but according to the 5 ms interlace, the four RB-wide transmissions would occur in the middle 1/3 portion of the bandwidth and thus collide with the sixteen RB-wide transmissions of the 2 ms period interlace.

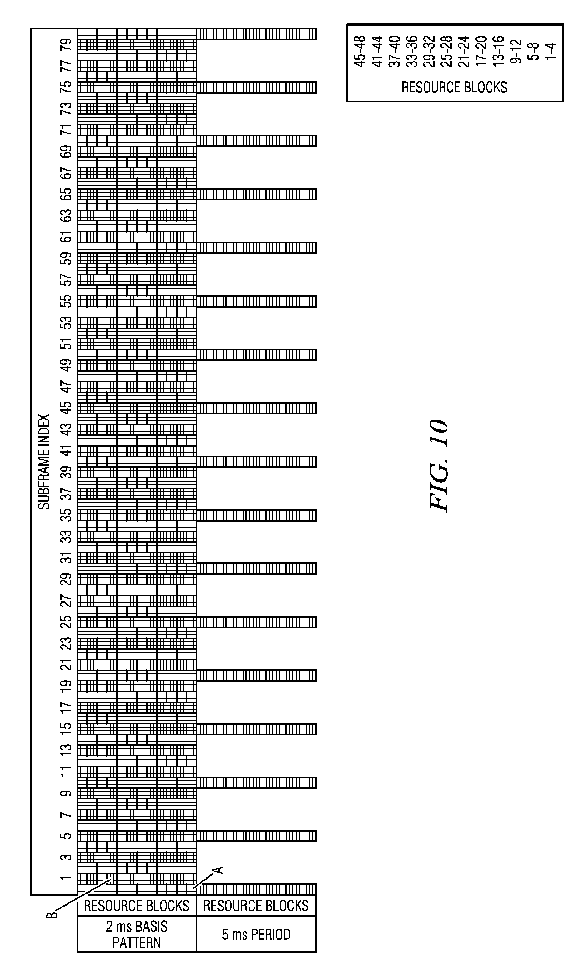

However, because the eNB has complete control over how it establishes the interlaces, rather than assigning UE "B" the frequency-domain location of 0, the eNB could have easily assigned UE "B" the frequency-domain location of 8, thus shifting the starting locations of the four RB-wide resources up to the upper 1/3 of the bandwidth. This condition is shown in Figure 10, and basically amounts to initializing the starting phase of the interlace that occupies odd subframes to a different value. This new value results in the 5 ms period interlace being fully compatible with both the even and odd subframe indices of the 2 ms period interlaces, as can be seen in subframe 5 of Figure 10, where the four RB-wide transmissions of the 5 ms period interlace now align with the 2 ms period interlace in the odd subframes as well. Setting the phase in this manner is fully backward compatible with the LTE Releases 8 and 9 since the eNB has the flexibility of assigning the starting locations for a UE flexibly using the parameter freqDomainPosition. Thus, setting the phases of the interlaces has no impact on the Release 8/9 capabilities and is fully backward compatible.

By imposing order on the interlaces by setting the phases properly, the eNB can maximize the number of periodicities that can be supported, while simultaneously minimizing the number of aperiodic configurations that must be defined to provide each UE with the ability to perform aperiodic sounding in every sounding subframe. In fact, the number of interlaces can be reduced to two for most of the bandwidth configurations by simply making a plurality of changes to the specification. More specifically, by defining a 1 ms basis hopping pattern. The 10 ms, 40 ms, and 160 ms periodic hopping patterns would be compatible with this basis pattern, and thus a UE could be triggered to perform aperiodic sounding in any subframes based on these periods by simply specifying the 1 ms basis pattern in those subframes. Also, by defining a 2 ms basis hopping pattern that is defined for all subframes, and where the relative phase of the even and odd subframes has a fixed relationship identical to that shown in Figure 7. The 2 ms, 5 ms, 20 ms, 80 ms, and 320 ms periodic hopping patterns would be compatible with this basis pattern, and thus a UE could be triggered to perform aperiodic sounding in any subframes based on these periods by simply specifying the 2 ms basis pattern in those subframes.

In one embodiment, in odd subframes, an aperiodic transmission based on the 2 ms basis pattern can use the modified freqDomainPosition value given by the relationship nRRC(odd subframes) = mod(nRRC+2*mSRS,1/msrs,3 , mSRS,0/msrs,3), where mod indicates the modulo operation. The known equations in 3GPP TS 36.211 would then apply.

This methodology is fully backward compatible with the Release 8/9 periodic sounding methodology and does not impact or reduce the current capabilities of periodic sounding, but merely sets the phase of each interlace such that every aperiodic sounding UE inherently knows what the hopping pattern is for every interlace to within a choice of two possibilities. This methodology reduces the amount of information that must be conveyed for the UE to have complete hopping information for every sounding subframe to a single bit per interlace. In certain embodiments, this information regarding which frequency hopping pattern applies to each subframe, is broadcast as part of the cell-specific parameters rather than adding it to the triggering DCI. Since there can only be a maximum of 10 interlaces, this equates to the relatively infrequent broadcasting of 10 bits to provide every UE with full knowledge of the resource mapping of every interlace, which is much more efficient than adding a bit to every UL grant to identify the mapping each time an aperiodic sounding reference signaling is triggered (which is one of several alternative embodiments). The legacy Release 8/9 UEs would not look at this information since they would not support aperiodic sounding and have no need for the information.

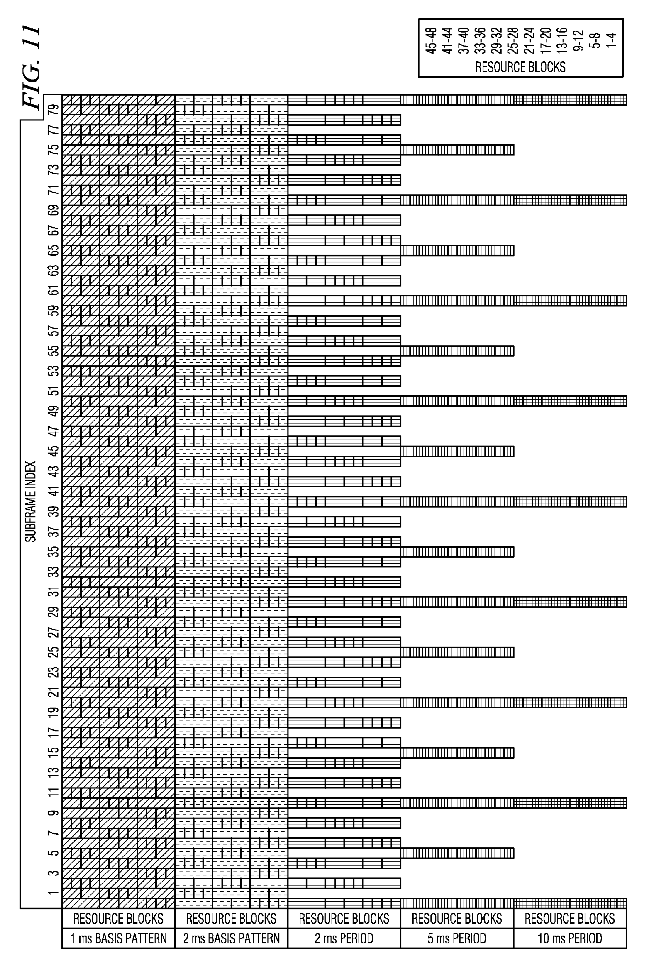

More specifically, with this embodiment, the system defines 1 ms and 2 ms basis hopping patterns. Together, these hopping patterns form a set of basis sounding periods compatible with all other sounding periods. The new basis patterns are shown in Figure 11. The system defines these basis periods as the resource mapping methodology for aperiodic sounding (i.e., each UE, when instructed to perform aperiodic sounding, would use one of these two basis patterns to determine which set of frequency-domain resources to use for sounding in a given subframe).

The 1 ms basis pattern can be defined by simply using the current Release 8/9 methodology, but using a UE-specific periodicity of 1 ms (i.e., TSRS = 1 ms)and a UE-specific subframe offset of 0 (i.e., Toffset = 0)

Also, the 2 ms basis pattern can be defined using the current Release 8/9 methodology by using the 2 ms UE-specific periodicity, but defining a new subframe-dependent freqDomainPosition (i.e., nRRC equals the configured value in even subframes, nRRC equals mod(nRRC+2*mSRS,1/msrs,3 , mSRS,0/msrs,3) in odd subframes. Alternatively, the 2 ms basis pattern can be defined as two separate hopping patterns using the Release 8/9 methodology and setting the freqDomainPositions for the two patterns such that the above described subframe-dependent freqDomainPosition is realized. This latter alternative would mean that one of three basis patterns would have to be indicated for each subframe in a system frame rather than only two basis patterns.

Also in this embodiment, in Release 10, eNBs that wish to exploit the new basis patterns would need to set the phase of each periodic sounding interlace so that it conforms to one of these two basis patterns.

Also, the system in this embodiment would define, for example, a 10-bit bitmap that is broadcast as part of the cell-specific broadcast information. Each of the 10 bits indicates whether a given subframe in each system frame is operating under the 1 ms basis period or the 2 ms basis period. This information informs every UE what resource mapping to use should the UE receive an aperiodic sounding trigger from the eNB. In other implementations, a skilled artisan would appreciate that the bitmap can include a different number of bits. For example, the bitmap can include N bits, where N is equal to the number of configured sounding subframes within a system frame, and a P-th bit in the bitmap provides an indication for the P-th sournding reference subframe in the system frame.

Also, with this system, no RRC signaling is required. Bandwidth, hopping bandwidth, frequency-domain location, and transmission comb can be taken from the periodic configuration. This is possible for a plurality of reasons. First, the sounding bandwidth of the periodic sounding should be maintained to the correct bandwidth to provide suitable power control and coarse channel state information between uplink traffic bursts, and so the sounding bandwidth should also be applicable for aperiodic sounding. Second, the frequency locations should be fairly well distributed between the UEs within the periodic sounding structure since these resources are assigned one-to-one between the different UEs. Third, the periodic comb assignment should be correct for the periodic configuration. Here, it is assumed that one comb will be used for wideband sounding and one comb will be used more narrow bandwidth sounding. Thus, a UE should optimally require sounding on only one comb and the periodic configuration should have the correct comb assignment. Fourth, hopping bandwidth of the periodic configuration should also be suitable for the aperiodic configuration. In another embodiment, each UE is assigned with a set of default aperiodic parameters that can be used for sounding purposes in case the periodic configuration has not been performed yet.

In certain embodiments, in the triggering downlink control information (DCI) which can be transmitted on, for example, a physical downlink control channel (PDCCH), three bits are added in addition to the triggering indication. Two of the additional bits are used to specify which cyclic shift to use, and one additional bit is used to specify for which basis pattern the allocation is scheduled (e.g., if the third bit is set to 0, the UE can perform sounding reference signaling at the next sounding opportunity for which the basis pattern is the 1 ms pattern. If the third bit is set to 1, the UE can perform sounding at the next sounding opportunity for which the basis pattern is the 2 ms pattern). This system increases the scheduling flexibility of the sounding transmissions, allowing the eNB some flexibility to schedule sounding transmissions in an order that is not tied to the order in which the sounding transmissions will occur. This flexibility is very desirable since it allows the traffic scheduler to be somewhat decoupled from the sounding transmission scheduler (i.e., the traffic scheduler can first determine which UEs should be scheduled based on traffic and quality of service (QOS) requirements, and then decide whether a sounding transmission is required and if so, which upcoming subframe would be more suitable with respect to the desired sounding location (i.e., frequency location) and with respect to sounding resource blocking).

In another embodiment, the sounding allocation is targeted at the next suitable sounding subframe (where suitable refers to conditions such as timing requirements, etc) and the third bit indicates whether that subframe is based on a 1 ms or 2 ms basis pattern. This embodiment would be useful in the case where the 10-bit bitmap was not broadcast to inform the UEs of the subframe type (where type refers to 1 ms basis or 2 ms basis), and no RRC configuration was performed either to indicate what the subframe types were.

In another embodiment, no third bit is included. Only the two bits to indicate the cyclic shift set to use is included with the trigger bit.

In summary, this embodiment defines new basis patterns to compress the amount of information that is conveyed for full knowledge of the frequency domain resources to only 10 bits, and a 10-bit broadcast message performs this conveyance.

In another embodiment, RRC signaling is used rather than broadcast information. More specifically with an RRC signaling methodology, the system defines the 1 ms and 2 ms basis periods. The system then uses RRC signaling to perform the aperiodic sounding configuration. In certain embodiments, the RRC signaling performs the aperiodic sounding configuration where the RRC signaling conveys only a 10-bit bitmap that indicates the basis pattern appropriate for each subframe. Aperiodic parameters, such as bandwidth, hopping bandwidth, frequency-domain location index, and transmission comb, are assumed to be identical to the periodic parameters. Thus, aperiodic frequency hopping patterns can use the same time domain radio resources as periodic sounding reference signaling.

In another embodiment, the RRC signaling conveys a single aperiodic parameter set containing parameters such as bandwidth, hopping bandwidth, frequency-domain location index, and transmission comb. In addition, the RRC signaling conveys a 10-bit bitmap for each UE that indicates the basis pattern in effect for each subframe of each system frame (i.e., the same information as that conveyed when the eNB initializes the UE with a set of M parameter override sets, but using unicast signaling rather than broadcast signaling).

In another embodiment, the basis pattern indications may not be a 10-bit bitmap, but may be a different form that only conveys the basis pattern for a particular subset of subframes in a system frame. For example, different DCI formats can be used as part of the indications. In this case, the indications may have an implied mapping (e.g., a one-to-one mapping for each subframe that is indicated as a sounding subframe in the broadcast information), or the indications may be an explicit mapping where the index of a specific set of subframes is provided along with the basis pattern to use for each.

Alternately the RRC signaling may convey a set of aperiodic configurations, along with an indication of which subframes each aperiodic configuration is applicable. Each aperiodic configuration includes an indication of the basis pattern to be assumed for the subframes in which it is applicable.

In this embodiment, in the triggering DCI, two bits are added in addition to the triggering indication, with the two bits used to specify which cyclic shift to use for the aperiodic sounding. Alternately, a third bit may be added to the triggering DCI to specify for which basis pattern the allocation is scheduled. In another alternate embodiment, the sounding allocation is targeted at the next suitable sounding subframe and a third bit is added to the DCI to indicate whether that subframe is based on a 1 ms or 2 ms basis pattern.

In another embodiment, RRC signaling of explicit hopping patterns is used rather than basis pattern indications. More specifically, when RRC signaling of explicit hopping patterns is used, the system uses RRC signaling to perform the aperiodic sounding configuration. The RRC signaling can use one of a plurality of methodologies. For example, the RRC signaling conveys a set of aperiodic configurations. Each aperiodic configuration includes a set of parameters that indicates a particular frequency hopping pattern. Other parameters may also be conveyed such as comb, sounding bandwidth, and frequency-domain resource index. In a variation of this operation, indications are provided in the same RRC signaling as to which aperiodic parameter set is valid for specific subframes. In another variation of this operation, only the sets are provided by the RRC signaling. The exact set to use is indicated using a bit or bits in the DCI used to send the aperiodic sounding trigger.

Also, when RRC signaling of explicit hopping patterns is used, in the triggering DCI, two bits are added to the triggering DCI in addition to the triggering indication, with the two bits used to specify which cyclic shift to use for the aperiodic sounding.

In another alternate embodiment, a 30-bit bitmap is used rather than a 10-bit bitmap. The embodiment where a 30-bit bitmap is used does not require the eNB to set the phase associated with each interlace to comply with one of the basis patterns, but merely indicates which basis pattern to use and the relative phase to apply to the basis pattern in order for it to comply with the subframe of interest. For each subframe, the information is conveyed regarding whether the basis pattern is the 1 ms or 2 ms basis pattern and which of the 3 phases is in effect for the basis pattern within the subframe.

The 30-bit bitmap can replace the 10-bit bitmap in either the UE-specific RRC configuration embodiment or the cell-specific RRC configuration embodiment. In addition, the UE-specific embodiment can be used to configure each UE individually at SRS configuration, and then use the cell-specific signaling only when the eNB changes one of the interlaces to a different hopping pattern.

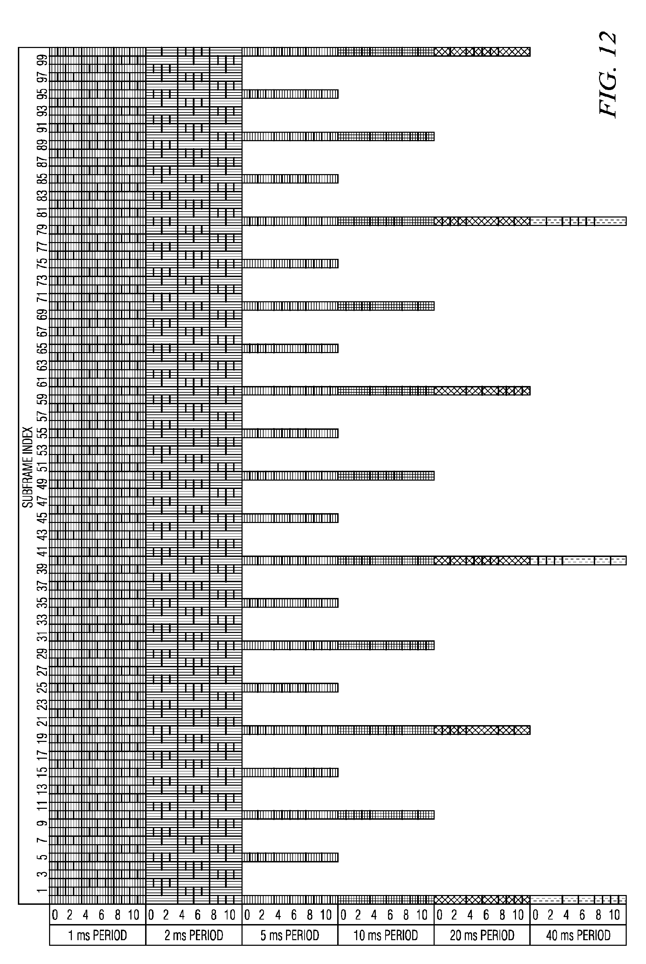

In another embodiment, the system provides support of non-homogenous sounding bandwidths. Most of the cell-specific bandwidth configurations work well using only the two-defined basis functions. However, there are some bandwidth configurations that have poor periodic-SRS multiplexing capabilities, and essentially require that UEs with different periodic-SRS periodicities be isolated on different interlaces. An example is shown in Figure 12, which shows bandwidth configuration 0 for a 10 MHz scenario. In this example, all sounding periods are synchronized in subframe 0. However, very few of the periods can be multiplexed with each other. Interlaces can be established in which UEs with periodic sounding periods of 1 ms and 5 ms can be multiplexed without collisions, and interlaces can be established in which UEs with periodic sounding periods of 2 ms and 10 ms can be multiplexed without collisions. UEs with any other sounding period must be isolated on a dedicated interlace to avoid collisions between sounding transmissions of bandwidth X and sounding transmissions of bandwidth Y. Because for these bandwidth configurations, two periods (A & B) must have the relation that A/B can be evenly divided by 5 to allow multiplexing. Because of the poor multiplexing capability, it is questionable as to the extent that these configurations will be used in actual deployments. However, they can be supported using one of the following alternative embodiments relating to non-homogenous sounding bandwidths:

In one embodiment relating to non-homogenous sounding bandwidths, the system continues to use only the 1 ms and 2 ms basis patterns. The eNB can verify for a particular UE if the aperiodic transmission would result in a collision with a different sounding bandwidth, and if so, the eNB simply does not trigger aperiodic sounding for the UE in that subframe and waits until a later subframe.

In another embodiment relating to non-homogenous sounding bandwidths, the system continues to use only the 1 ms and 2 ms basis patterns, but adds additional bits to the physical layer signaling to specify a subframe shift that should be applied to the basis pattern to obtain the correct hopping pattern for a given subframe. A skilled artisan would appreciate that the physical layer signaling can use, for example, a physical downlink control channel (PDCCH). Since the 1 ms basis pattern repeats every 4 subframes, 2 bits in the DCI would enable the eNB to trigger aperiodic sounding in every sounding subframe regardless of the periodic-sounding periodicity.

In another embodiment relating to non-homogenous sounding bandwidths, the system increases the number of basis patterns. To provide full support, the bitmap would be expanded from 10 bits to 30, with each set of 3 bits indicating one of the basis patterns from the set {1,2,4,8,16,32,64} ms. In this embodiment, UEs with periodic SRS periods of 1 ms and 5 ms are multiplexed in the same interlace. Aperiodic sounding is supported in that interlace using the 1 ms basis pattern. UEs with periodic SRS periods of 2 ms and 10 ms are multiplexed in the same interlace. Aperiodic sounding is supported in that interlace using the 2 ms basis pattern. UEs with a periodic SRS period of 20 ms are isolated on their own interlace using known periodic methodology. To support aperiodic sounding for this interlace, a 4 ms basis pattern is used. UEs with a periodic SRS period of 40 ms are isolated on their own interlace using known periodic methodology. To support aperiodic sounding for this interlace, an 8 ms basis pattern is used. UEs with a periodic SRS period of 80 ms are isolated on their own interlace using known periodic methodology. To support aperiodic sounding for this interlace, a 16 ms basis pattern is used. UEs with a periodic SRS period of 160 ms are isolated on their own interlace using known periodic methodology. To support aperiodic sounding for this interlace, a 32 ms basis pattern is used. UEs with a periodic SRS period of 320 ms are isolated on their own interlace using known periodic methodology. To support aperiodic sounding for this interlace, a 64 ms basis pattern is used.

In another embodiment relating to non-homogenous sounding bandwidths, the system uses two basis patterns, but allows the eNB to specify which two basis patterns are indicated by the 10-bit bitmap. For example, longer-duration sounding may be limited to one value (e.g., 40 ms) and so a 1 in the bitmap could indicate that an 8 ms basis pattern would apply. Shorter duration sounding could be limited to the 2 ms and 10 ms periods, and the 2 ms basis pattern applies to both of these and could be indicated by a 0 in the bitmap.

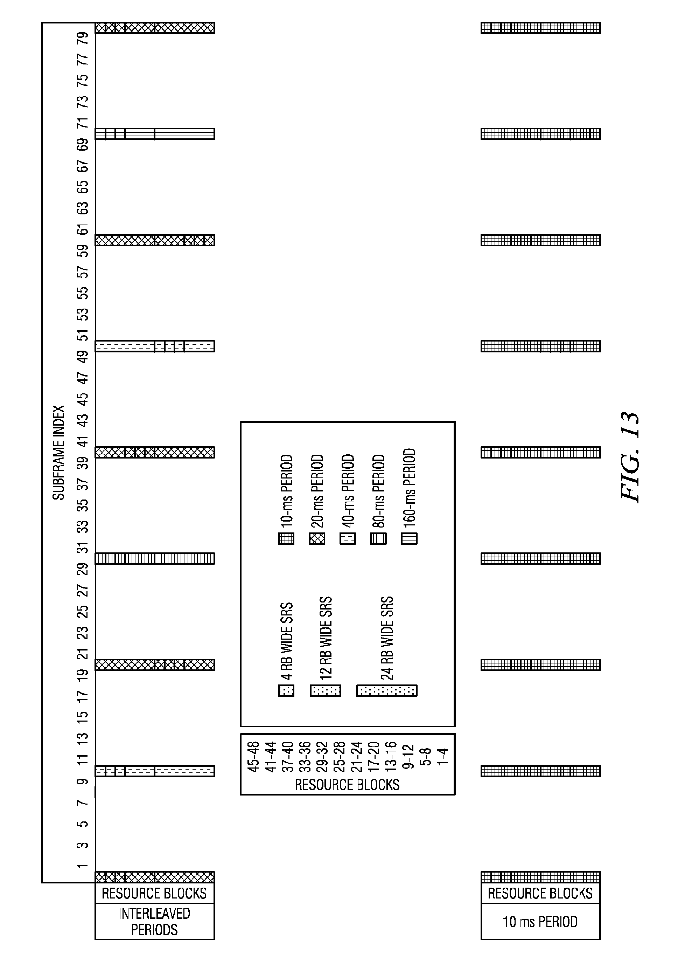

In another embodiment, the system provides support for interlace splitting and/or non-homogenous sounding bandwidths. In some scenarios, interlaces can be created where it is difficult or impossible to designate a single semi-static hopping pattern that would correctly indicate the proper bandwidth locations in every sounding subframe. One example of this is where a single interlace of period P1 is split into multiple sub-interlaces, each with period greater than P1, that are then interleaved such that they occupy the original interlace of period P1. An example is shown in Figure 13. In this scenario, and in other scenarios where a single hopping pattern cannot be semi-statically configured, the system provides support for interlace splitting and/or non-homogenous sounding bandwidths.

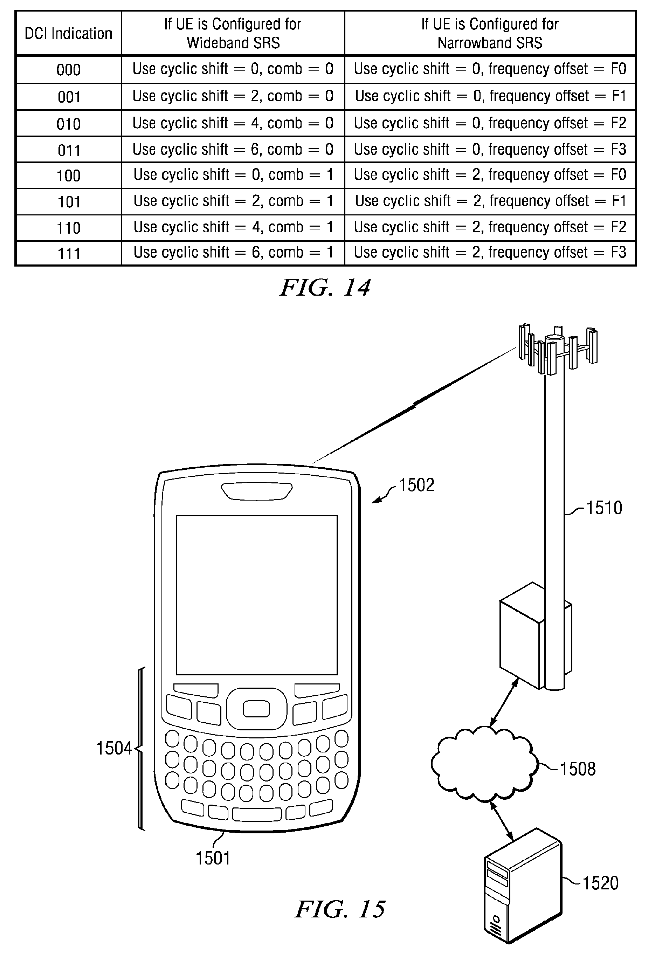

More specifically, in the DCI that is used to trigger the aperiodic sounding, M bits are used to indicate one of N possibilities regarding the resources to be used by the UE when performing the sounding. When the UE has been semi-statically configured to perform aperiodic sounding using the full channel bandwidth, each of the N possibilities indicates a set of resources from set A (e.g., different combinations of cyclic shift and comb). If the UE has been semi-statically configured to perform aperiodic sounding using less than the full channel bandwidth, then each of the N possibilities indicate a set of resources from set B (e.g., cyclic shift and frequency-domain offset). An example of how the DCI indications are dependent upon the sounding bandwidth is shown in the table set forth in Figure 14. In this example, it is assumed that each UE has received a semi-static configuration of all or part of the parameters necessary for the UE to perform aperiodic sounding. In this example, it is also assumed that the aperiodic sounding bandwidth is one of those semi-statically-configured parameters.

In this example, when the eNB triggers sounding for a UE, the eNB also sends a 3-bit indication within the triggering DCI to fine-tune the set of resources that the UE should use for the aperiodic sounding. The UE, upon receiving this indication, selects the appropriate resources from the table shown in Figure 14 based on its semi-statically configured aperiodic sounding bandwidth. If the UE is semi-statically configured to perform aperiodic wideband sounding, then the UE selects the appropriate entry from column 2 of the table, which indicates the appropriate cyclic shift and comb to be used for the aperiodic sounding transmission. In this case, the bandwidth location is that given by the semi-statically-configured parameter. If the UE is configured to perform narrowband sounding, then it selects the appropriate entry from column 3 of the table, which indicates the appropriate cyclic shift and a frequency offset to be applied to the bandwidth location that it would normally use for that transmission instance, and the UE uses the semi-statically configured comb for the transmission. Thus, the table in Figure 14 provides a set of overrides to the semi-statically configured aperiodic parameters. Although the table in Figure 14 uses only the DCI indication and the semi-statically configured bandwidth to determine the correct set of overrides to employ during an aperiodic sounding transmission, larger tables can also be employed which are a function of even more parameters, such as the number of antennas that the UE will use when performing the aperiodic sounding transmissions, the cell-specific bandwidth configuration that is in use for that sounding subframe, the exact bandwidth of the sounding transmissions, etc.

In another embodiment of providing support for interlace splitting and/or non-homogenous sounding bandwidths, the eNB semi-statically configures whether the indication is to map to set A or set B. In another embodiment of providing support for interlace splitting and/or non-homogenous sounding bandwidths, the eNB semi-statically configures an indication that informs the UE of which subframes that set A should be used and in which subframes that set B should be used.

Note that, while the above embodiments were described in the context of providing support for interlace splitting and/or non-homogenous sounding bandwidths, the concepts employed in the above embodiments can generally be employed to provide other benefits not necessarily related to providing support for interlace splitting and/or non-homogenous sounding bandwidths. A more general application of the above concepts provides a methodology to reduce the amount of physical layer signaling that must be employed, while preserving the ability for the eNB to multiplex the sounding transmissions of multiple UEs into a limited amount of sounding resources. In this more general embodiment, the eNB semi-statically configures at least one set of aperiodic sounding parameters at the UE that is to be used as a default set of sounding parameters.

It is known that, in order to define frequency hopping, two temporal quantities need to be defined. One of the temporal quantities is the sounding period (e.g., transmit every 10 ms), and the other of the temporal quantities is the temporal offset (e.g., the first transmission should occur at 0 ms as opposed to at 5 ms). In addition, a quantity in the frequency domain needs to be defined to indicate which portion of the frequency band is sounded within a reference subframe. As an example, the UE can be configured to perform its first sounding transmission at 0 ms and then sound every 10 ms after that. This configures the temporal quantities. The UE also needs to know which portion of the frequency band to sound when performing its first transmission. For example, if the UE is configured to perform sounding using a half-bandwidth transmission, it needs to know whether to perform its initial transmission using the first half of the bandwidth or the second half.

Thus, in one embodiment, the default set of sounding parameters may contain all or a subset of the following parameters: transmission bandwidth (e.g., srs-Bandwidth), hopping bandwidth (e.g., srs-HoppingBandwidth), frequency-domain starting position (e.g., freqDomainPosition), sounding duration (e.g., duration), configuration index (e.g., srs-Configlndex), transmission comb (e.g., transmissionComb), and cyclic shift (e.g., cyclicShift), and may contain additional parameters such as the number of antennas to perform sounding (e.g, numAntennas), and a cyclic shift delta (e.g., cyclicShiftDelta), as well as others. Here, the number of antennas to perform sounding indicates the number of antennas for which the UE is instructed to send aperiodic sounding transmissions from during the sounding process, cyclic shift indicates the cyclic shift to be used for the transmission occurring on the first antenna used during the sounding process, and cyclic shift delta is an additional parameter that the UE can use to determine the cyclic shifts for the remaining antennas based on the cyclic shift indicated for the first antenna using a simple algebraic relationship such as CSk = (cyclic shift + k*(cyclic shift delta) mod 8, where CSk is the cyclic shift for the kth antenna, "*" indicates multiplication, and "mod" indicates the modulo operation (i.e., A mod B equals the remainder after A is divided by B).

Once the eNB configures this default set of aperiodic sounding parameters at the UE, the UE will use this default set when performing its aperiodic sounding transmissions unless the UE receives an indication to override one or more values in the default set for a specific transmission (an override refers to using a substitute value (or values) for the value (or values) contained in the default set, where the substitute value can be unrelated to the value in the default set, or it can be a function of the value in the default set).

When performing the override process, in the DCI that is used to trigger the aperiodic sounding, the eNB provides an indication of the override that is to be used by the UE when performing aperiodic sounding transmissions resulting from that trigger. The UE is also configured with a table that describes which parameters in its default set are affected by the override and how they are affected. The table is a function of one or more parameters semi-statically configured for the UE and can also be a function of the semi-statically configured cell-specific parameters (e.g., srs-BandwidthConfig ) as well. An example of such a table is illustrated in Figure 14, which depicts that if the UE receives the DCI indication and the UE's semi-statically configured sounding transmission bandwidth is configured for wideband sounding (e.g., srs-Bandwidth equals 0), then the UE should interpret the DCI indication as overriding both the cyclic shift value and the transmission comb values. However, if the UE is semi-statically configured to perform narrowband sounding (e.g., srs-Bandwidth > 0), then the UE should override the cyclic shift value and the frequency-domain starting value.

While Figure 14 specifies the override values as a function of only the DCI indication and the sounding bandwidth, other tables are envisioned which can be a function of any of the semi-statically configured cell-specific or UE-specific values. In particular, tables are envisioned which are a function of one or more of the following: the cell-specific bandwidth configuration (e.g., srs-BandwidthConfig), whether the UE-specific sounding bandwidth is wideband or narrowband, the exact UE-specific sounding bandwidth, the number of antennas used for the sounding transmission. It may also be a function of whether the sounding transmission is to occur in subframes for which periodic sounding transmissions are to also occur or whether it is to occur in subframes for which only aperiodic sounding transmissions are to occur. One advantage of this embodiment is that fewer bits have to be used for the DCI indication since the embodiment makes use of additional semi-static parameters when performing the table lookup. The present disclosure provides a signaling-efficient means to support aperiodic (triggered) transmission of frequency-hopped narrowband sounding reference signals (SRS). The system and method allows for narrowband sounding to be performed in every sounding subframe in a manner that ensures coordinated frequency-domain separation between all UEs simultaneously transmitting SRS whilst requiring only some additional RRC configuration.

Without such a system and method, an increased amount of physical layer signaling would be required to support narrowband aperiodic sounding in every sounding subframe in order to explicitly indicate the frequency resources that should be used each time an aperiodic SRS is triggered.

Such a system and method provides a plurality of benefits including less time being required to obtain updated channel information; reduced blocking; less layer 1 signaling overhead; and, more efficient sounding resource utilization

Figure 15 illustrates a wireless communications system including an embodiment of user agent (UA) 1501. UA 1501 is operable for implementing aspects of the disclosure, but the disclosure should not be limited to these implementations. Though illustrated as a mobile phone, the UA 1501 may take various forms including a wireless handset, a pager, a personal digital assistant (PDA), a portable computer, a tablet computer, a laptop computer. Many suitable devices combine some or all of these functions. In some embodiments of the disclosure, the UA 1501 is not a general purpose computing device like a portable, laptop or tablet computer, but rather is a special-purpose communications device such as a mobile phone, a wireless handset, a pager, a PDA, or a telecommunications device installed in a vehicle. The UA 1501 may also be a device, include a device, or be included in a device that has similar capabilities but that is not transportable, such as a desktop computer, a set-top box, or a network node. The UA 1501 may support specialized activities such as gaming, inventory control, job control, and/or task management functions, and so on.

The UA 1501 includes a display 1502. The UA 1501 also includes a touch-sensitive surface, a keyboard or other input keys generally referred as 1504 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a track wheel, an exit or escape key, a trackball, and other navigational or functional keys, which may be inwardly depressed to provide further input function. The UA 1501 may present options for the user to select, controls for the user to actuate, and/or cursors or other indicators for the user to direct.

The UA 1501 may further accept data entry from the user, including numbers to dial or various parameter values for configuring the operation of the UA 1501. The UA 1501 may further execute one or more software or firmware applications in response to user commands. These applications may configure the UA 1501 to perform various customized functions in response to user interaction. Additionally, the UA 1501 may be programmed and/or configured over-the-air, for example from a wireless base station, a wireless access point, or a peer UA 1501.

Among the various applications executable by the UA 1501 are a web browser, which enables the display 1502 to show a web page. The web page may be obtained via wireless communications with a wireless network access node, a cell tower, a peer UA 1501, or any other wireless communication network or system 1500. The network 1500 is coupled to a wired network 1508, such as the Internet. Via the wireless link and the wired network, the UA 1501 has access to information on various servers, such as a server 1510. The server 1510 may provide content that may be shown on the display 1502. Alternately, the UA 1501 may access the network 1500 through a peer UA 1501 acting as an intermediary, in a relay type or hop type of connection.

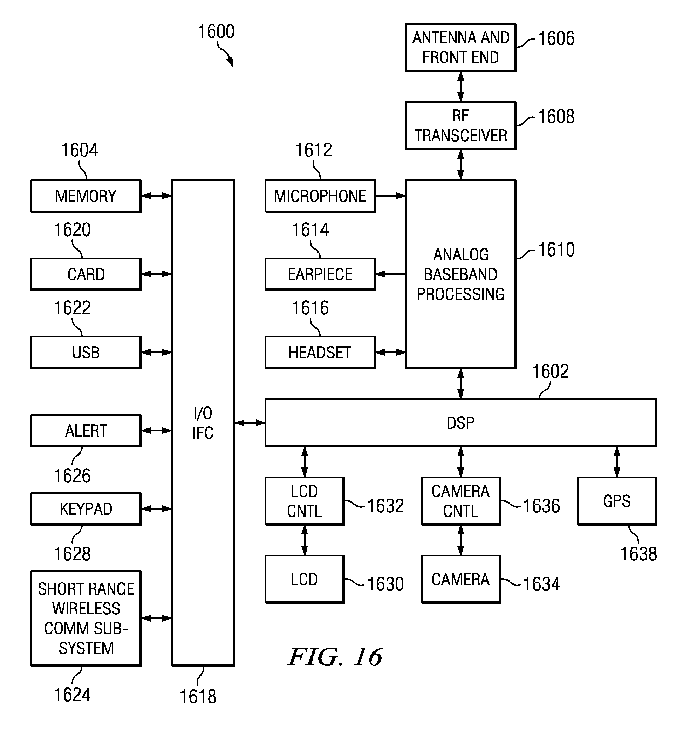

Figure 16 shows a block diagram of the UA 1501. While a variety of known components of UAs 10 are depicted, in an embodiment a subset of the listed components and/or additional components not listed may be included in the UA 101. The UA 101 includes a digital signal processor (DSP) 1602 and a memory 1604. As shown, the UA 101 may further include an antenna and front end unit 1606, a radio frequency (RF) transceiver 1608, an analog baseband processing unit 1610, a microphone 1612, an earpiece speaker 1614, a headset port 1616, an input/output interface 1618, a removable memory card 1620, a universal serial bus (USB) port 1622, a short range wireless communication sub-system 1624, an alert 1626, a keypad 1628, a liquid crystal display (LCD), which may include a touch sensitive surface 1630, an LCD controller 1632, a charge-coupled device (CCD) camera 1634, a camera controller 1636, and a global positioning system (GPS) sensor 1638. In an embodiment, the UA 101 may include another kind of display that does not provide a touch sensitive screen. In an embodiment, the DSP 1602 may communicate directly with the memory 1604 without passing through the input/output interface 1618.

The DSP 1602 or some other form of controller or central processing unit operates to control the various components of the UA 101 in accordance with embedded software or firmware stored in memory 1604 or stored in memory contained within the DSP 1602 itself. In addition to the embedded software or firmware, the DSP 1602 may execute other applications stored in the memory 1604 or made available via information carrier media such as portable data storage media like the removable memory card 1620 or via wired or wireless network communications. The application software may comprise a compiled set of machine-readable instructions that configure the DSP 1602 to provide the desired functionality, or the application software may be high-level software instructions to be processed by an interpreter or compiler to indirectly configure the DSP 1602.

The antenna and front end unit 1606 may be provided to convert between wireless signals and electrical signals, enabling the UA 101 to send and receive information from a cellular network or some other available wireless communications network or from a peer UA 101. In an embodiment, the antenna and front end unit 1606 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 1606 may include antenna tuning and/or impedance matching components, RF power amplifiers, and/or low noise amplifiers.

The RF transceiver 1608 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 1610 and/or the DSP 1602 or other central processing unit. In some embodiments, the RF Transceiver 1608, portions of the Antenna and Front End 1606, and the analog base band processing unit 1610 may be combined in one or more processing units and/or application specific integrated circuits (ASICs).

The analog baseband processing unit 1610 may provide various analog processing of inputs and outputs, for example analog processing of inputs from the microphone 1612 and the headset 1616 and outputs to the earpiece 1614 and the headset 1616. To that end, the analog baseband processing unit 1610 may have ports for connecting to the built-in microphone 1612 and the earpiece speaker 1614 that enable the UA 101 to be used as a cell phone. The analog baseband processing unit 1610 may further include a port for connecting to a headset or other hands-free microphone and speaker configuration. The analog baseband processing unit 1610 may provide digital-to-analog conversion in one signal direction and analog-to-digital conversion in the opposing signal direction. In some embodiments, at least some of the functionality of the analog baseband processing unit 1610 may be provided by digital processing components, for example by the DSP 1602 or by other central processing units.

The DSP 1602 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 1602 may perform modulation, coding, interleaving, and spreading, and for a receiver function the DSP 1602 may perform despreading, deinterleaving, decoding, and demodulation. In another embodiment, for example in an orthogonal frequency division multiplex access (OFDMA) technology application, for the transmitter function the DSP 1602 may perform modulation, coding, interleaving, inverse fast Fourier transforming, and cyclic prefix appending, and for a receiver function the DSP 1602 may perform cyclic prefix removal, fast Fourier transforming, deinterleaving, decoding, and demodulation. In other wireless technology applications, yet other signal processing functions and combinations of signal processing functions may be performed by the DSP 1602.

The DSP 1602 may communicate with a wireless network via the analog baseband processing unit 1610. In some embodiments, the communication may provide Internet connectivity, enabling a user to gain access to content on the Internet and to send and receive e-mail or text messages. The input/output interface 1618 interconnects the DSP 1602 and various memories and interfaces. The memory 1604 and the removable memory card 1620 may provide software and data to configure the operation of the DSP 1602. Among the interfaces may be the USB interface 1622 and the short range wireless communication sub-system 1624. The USB interface 1622 may be used to charge the UA 101 and may also enable the UA 101 to function as a peripheral device to exchange information with a personal computer or other computer system. The short range wireless communication sub-system 1624 may include an infrared port, a Bluetooth interface, an IEEE 202.11 compliant wireless interface, or any other short range wireless communication sub-system, which may enable the UA 1501 to communicate wirelessly with other nearby mobile devices and/or wireless base stations.

The input/output interface 1618 may further connect the DSP 1602 to the alert 1626 that, when triggered, causes the UA 1501 to provide a notice to the user, for example, by ringing, playing a melody, or vibrating. The alert 1626 may serve as a mechanism for alerting the user to any of various events such as an incoming call, a new text message, and an appointment reminder by silently vibrating, or by playing a specific pre-assigned melody for a particular caller.

The keypad 1628 couples to the DSP 1602 via the interface 1618 to provide one mechanism for the user to make selections, enter information, and otherwise provide input to the UA 1501. The keyboard 1628 may be a full or reduced alphanumeric keyboard such as QWERTY, Dvorak, AZERTY and sequential types, or a traditional numeric keypad with alphabet letters associated with a telephone keypad. The input keys may include a track wheel, an exit or escape key, a trackball, and other navigational or functional keys, which may be inwardly depressed to provide further input function. Another input mechanism may be the LCD 1630, which may include touch screen capability and also display text and/or graphics to the user. The LCD controller 1632 couples the DSP 1602 to the LCD 1630.

The CCD camera 1634, if equipped, enables the UA 1501 to take digital pictures. The DSP 1602 communicates with the CCD camera 1634 via the camera controller 1636. In another embodiment, a camera operating according to a technology other than Charge Coupled Device cameras may be employed. The GPS sensor 1638 is coupled to the DSP 1602 to decode global positioning system signals, thereby enabling the UA 1501 to determine its position. Various other peripherals may also be included to provide additional functions, e.g., radio and television reception.

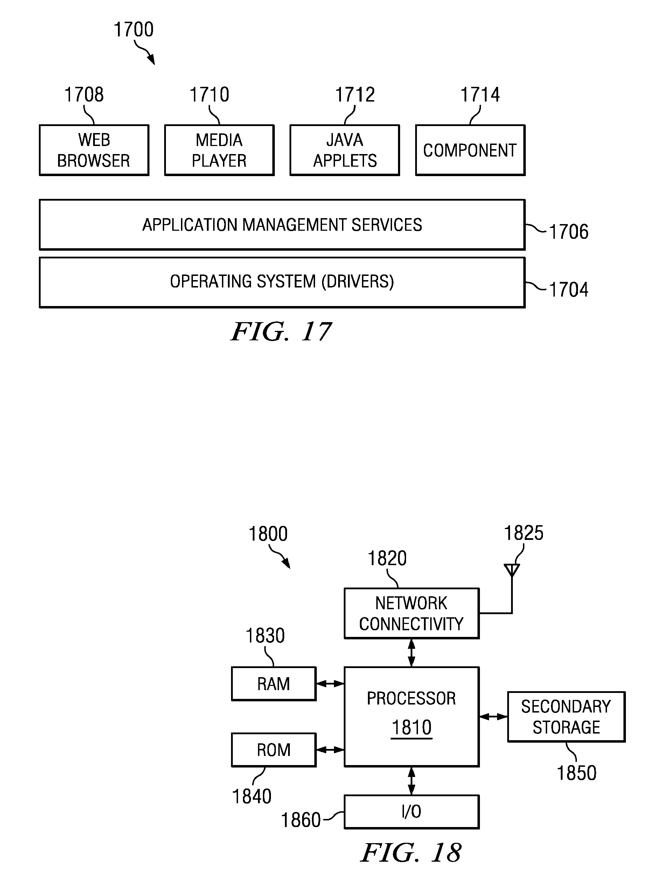

Figure 17 illustrates a software environment 1702 that may be implemented by the DSP 1602. The DSP 1602 executes operating system drivers 1704 that provide a platform from which the rest of the software operates. The operating system drivers 1704 provide drivers for the UA hardware with standardized interfaces that are accessible to application software. The operating system drivers 1704 include application management services (AMS) 1706 that transfer control between applications running on the UA 1501. Also shown in Fig. 17 are a web browser application 1708, a media player application 1710, and Java applets 1712. The web browser application 1708 configures the UA 1501 to operate as a web browser, allowing a user to enter information into forms and select links to retrieve and view web pages. The media player application 1710 configures the UA 1501 to retrieve and play audio or audiovisual media. The Java applets 1712 configure the UA 1501 to provide games, utilities, and other functionality. A component 1714 might provide functionality described herein.

The UA 1501, base station 1520, and other components described above might include a processing component that is capable of executing instructions related to the actions described above. Fig. 18 illustrates an example of a system 1800 that includes a processing component 1810 suitable for implementing one or more embodiments disclosed herein. In addition to the processor 1810 (which may be referred to as a central processor unit (CPU or DSP), the system 1800 might include network connectivity devices 1820, random access memory (RAM) 1830, read only memory (ROM) 1840, secondary storage 1850, and input/output (I/O) devices 1860. In some cases, some of these components may not be present or may be combined in various combinations with one another or with other components not shown. These components might be located in a single physical entity or in more than one physical entity. Any actions described herein as being taken by the processor 1810 might be taken by the processor 1810 alone or by the processor 1810 in conjunction with one or more components shown or not shown in the drawing.

The processor 1810 executes instructions, codes, computer programs, or scripts that it might access from the network connectivity devices 1820, RAM 1830, ROM 1840, or secondary storage 1850 (which might include various disk-based systems such as hard disk, floppy disk, or optical disk). While only one processor 1810 is shown, multiple processors may be present. Thus, while instructions may be discussed as being executed by a processor, the instructions may be executed simultaneously, serially, or otherwise by one or multiple processors. The processor 1810 may be implemented as one or more CPU chips.

The network connectivity devices 1820 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 1820 may enable the processor 1810 to communicate with the Internet or one or more telecommunications networks or other networks from which the processor 1810 might receive information or to which the processor 1810 might output information.

The network connectivity devices 1820 might also include one or more transceiver components 1825 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1825 might include separate receiving and transmitting units or a single transceiver. Information transmitted or received by the transceiver 1825 may include data that has been processed by the processor 1810 or instructions that are to be executed by processor 1810. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1830 might be used to store volatile data and perhaps to store instructions that are executed by the processor 1810. The ROM 1840 is a non-volatile memory device that typically has a smaller memory capacity than the memory capacity of the secondary storage 1850. ROM 1840 might be used to store instructions and perhaps data that are read during execution of the instructions. Access to both RAM 1830 and ROM 1840 is typically faster than to secondary storage 1850. The secondary storage 1850 is typically comprised of one or more disk drives or tape drives and might be used for non-volatile storage of data or as an over-flow data storage device if RAM 1830 is not large enough to hold all working data. Secondary storage 1850 may be used to store programs that are loaded into RAM 1830 when such programs are selected for execution.

The I/O devices 1860 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1825 might be considered to be a component of the I/O devices 1860 instead of or in addition to being a component of the network connectivity devices 1820. Some or all of the I/O devices 1860 may be substantially similar to various components depicted in the previously described drawing of the UA 1501, such as the display 1502 and the input 1504.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

As used herein, the terms "component," "system" and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a computer and the computer can be a component. One or more components may reside within a process and/or thread of execution and a component may be localized on one computer and/or distributed between two or more computers.

As used herein, the terms "user equipment" and "UE" can refer to wireless devices such as mobile telephones, personal digital assistants (PDAs), handheld or laptop computers, and similar devices or other user agents ("UAs") that have telecommunications capabilities. In some embodiments, a UE may refer to a mobile, wireless device. The term "UE" may also refer to devices that have similar capabilities but that are not generally transportable, such as desktop computers, set-top boxes, or network nodes.

Furthermore, the disclosed subject matter may be implemented as a system, method, apparatus, or article of manufacture using standard programming and/or engineering techniques to produce software, firmware, hardware, or any combination thereof to control a computer or processor based device to implement aspects detailed herein. The term "article of manufacture" (or alternatively, "computer program product") as used herein is intended to encompass a computer program accessible from any computer-readable device, carrier, or media. For example, computer readable media can include but are not limited to magnetic storage devices (e.g., hard disk, floppy disk, magnetic strips ...), optical disks (e.g., compact disk (CD), digital versatile disk (DVD) ... ), smart cards, and flash memory devices (e.g., card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the claimed subject matter.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made without departing from the spirit and scope disclosed herein. Although the present disclosure has been described in detail, it should be understood that various changes, substitutions and alterations can be made hereto without departing from the spirit and scope of the disclosure as defined by the appended claims.
"computer program product") as used herein is intended to encompass a computer program accessible from any computer-readable device, carrier, or media. For example, computer readable media can include but are not limited to magnetic storage devices (e.g., hard disk, floppy disk, magnetic strips ...), optical disks (e.g., compact disk (CD), digital versatile disk (DVD) ...), smart cards, and flash memory devices (e.g., card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the claimed subject matter.

[0135] Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made without departing from the spirit and scope disclosed herein. Although the present disclosure has been described in detail, it should be understood that various changes, substitutions and alterations can be made hereto without departing from the spirit and scope of the disclosure as defined by the appended claims.
The following are further aspects according to the present invention.
Numbered clause 1. A method for operating a wireless communication network, the method comprising:
   configuring, by an enhanced node B (eNB) in the network, a plurality of aperiodic frequency hopping patterns; and
   indicating, by the eNB, one of the plurality of aperiodic frequency hopping patterns to a user equipment (UE) in the network such that the UE uses the resources associated with said frequency hopping pattern within a sounding reference signal (SRS) subframe.
Numbered clause 2. The method of numbered clause 1, wherein indicating the one of the plurality of aperiodic frequency hopping patterns comprises transmitting a broadcast message to two or more UEs.
Numbered clause 3. The method of numbered clause 1, wherein indicating the one of the plurality of aperiodic frequency hopping patterns comprises transmitting a unicast message to a single UE.
Numbered clause 4. An access device for use in a wireless communication network, the access device comprising:
   a processor configured such that the access device configures a plurality of aperiodic frequency hopping patterns,
   wherein the access device is configured to indicate one of the plurality of aperiodic frequency hopping patterns to a user equipment (UE) in the network such that the UE uses the resources associated with said frequency hopping pattern within a sounding reference signal (SRS) subframe.
Numbered clause 5. The device of numbered clause 4, wherein the access device is configured to indicate the one of the plurality of aperiodic frequency hopping patterns by transmitting a broadcast message to two or more UEs.
Numbered clause 6. The device of numbered clause 4, wherein the access device is configured to indicate the one of the plurality of aperiodic frequency hopping patterns by transmitting a unicast message to a single UE.
Numbered clause 7. A method for operating a user equipment (UE) in a wireless communication network, the method comprising:
   receiving, by the UE, an indication of one of the plurality of aperiodic frequency hopping patterns configured by an enhanced node B (eNB) in the network; and
   transmitting, by the UE, an aperiodic sounding reference signaling within a sounding reference signal (SRS) subframe, using resources associated with the one of the plurality of aperiodic frequency hopping patterns.
Numbered clause 8. The method of numbered clause 7, wherein receiving the one of the plurality of aperiodic frequency hopping patterns comprises receiving a broadcast message.
Numbered clause 9. The method of numbered clause 7, wherein receiving the one of the plurality of aperiodic frequency hopping patterns comprises receiving a unicast message.
Numbered clause 10. A user equipment (UE) for use in a wireless communication network, the UE comprising:
   a processor configured such that the UE receives an indication of one of the plurality of aperiodic frequency hopping patterns configured by an enhanced node B (eNB) in the network,
   wherein the UE is configured to transmit an aperiodic sounding reference signaling within a sounding reference signal (SRS) subframe, using resources associated with the one of the plurality of aperiodic frequency hopping patterns.
Numbered clause 11. The UE of numbered clause 10, wherein the UE is configured to receive the one of the plurality of aperiodic frequency hopping patterns by receiving a broadcast message.
Numbered clause 12. The UE of numbered clause 10, wherein the UE is configured to receive the one of the plurality of aperiodic frequency hopping patterns by receiving a unicast message.

## Claims

1. A method for operating an enhanced node B (eNB) in a wireless communication network, the method comprising:
configuring, by the eNB, a plurality of aperiodic sounding reference signaling configurations, each of said aperiodic sounding reference signaling configurations containing at least one parameter that indicates one of a plurality of aperiodic frequency hopping patterns; and
indicating, by the eNB, one of the plurality of aperiodic sounding reference signaling configurations to a user equipment (UE) in the network such that the UE uses the aperiodic sounding reference signaling configuration and its associated aperiodic frequency hopping pattern within a sounding reference signal (SRS) subframe.

2. The method of claim 1, wherein the two or more of said aperiodic sounding reference signaling configurations contain different parameters from each other, the different parameters indicating different aperiodic frequency hopping patterns.

3. The method of claim 1 or 2, wherein at least one of the indicated aperiodic frequency hopping patterns is configured to use the same time domain radio resource as periodic sounding reference signaling.

4. The method of any preceding claim, wherein indicating the one of the plurality of aperiodic sounding reference signaling configurations comprises sending a radio resource control (RRC) message by the eNB.

5. The method of any preceding claim, wherein indicating the one of the plurality of aperiodic sounding reference signaling configurations comprises transmitting, by the eNB, one or more bits on a physical downlink control channel (PDCCH), and wherein the one or more bits are indicative of one of the configurations.

6. The method of any preceding claim, wherein indicating the one of the plurality of aperiodic sounding reference signaling configurations comprises using, by the eNB, different formats of a message transmitted to the UE.

7. The method of any preceding claim, wherein the message comprises downlink control information (DCI), and wherein the different formats are different formats of the DCI.

8. The method of any preceding claim, wherein indicating the one of the plurality of aperiodic sounding reference signaling configurations comprises using downlink control information (DCI), and wherein the DCI includes at least one bit indicating one of the configurations.

9. The method of any preceding claim, wherein two or more of the plurality of aperiodic sounding reference signaling configurations have different combinations of periods and subframe offsets.

10. The method of any preceding claim, wherein two or more of the plurality of aperiodic sounding reference signaling configurations have different frequency hopping patterns from each other.

11. A method for operating a user equipment (UE) in a wireless communication network, the method comprising:
receiving, by the UE, an indication of one of a plurality of aperiodic sounding reference signaling configurations configured by an enhanced node B (eNB) in the network, each of said aperiodic sounding reference signaling configurations containing at least one parameter that indicates one of a plurality of aperiodic frequency hopping patterns; and
transmitting, by the UE, an aperiodic sounding reference signaling within a sounding reference signal (SRS) subframe, using the one of the plurality of aperiodic sounding reference signaling configurations and its associated aperiodic frequency hopping pattern.

12. The method of claim 11, wherein at least one of the aperiodic frequency hopping patterns is configured to use the same time domain radio resource as periodic sounding reference signaling.

13. The method of claim 11 or 12, wherein receiving the indication comprises using a radio resource control (RRC) message.

14. The method of any of claims 11 to 13, wherein receiving the indication comprises receiving, by the UE, one or more bits on a physical downlink control channel (PDCCH), and wherein the one or more bits are indicative of one of the configurations.

15. The method of any of claims 11 to 14, wherein receiving the indication comprises receiving, by the UE, different formats of a message transmitted to the UE.

16. The method of any of claims 11 to 15, wherein receiving the indication comprises receiving downlink control information (DCI), and wherein the DCI includes at least one bit indicating one of the configurations.

17. The method of any of claims 11 to 16, wherein two or more of the plurality of aperiodic sounding reference signaling configurations have different frequency hopping patterns from each other.

18. An access device for use in a wireless communication network, the access device comprising:
a processor configured to perform the method of any of claims 1 to 10.

19. A user equipment (UE) for use in a wireless communication network, the UE comprising:
a processor configured to perform the method of any of claims 11 to 17.
